# EUROPEAN PATENT APPLICATION

(11) **EP 2 528 270 A1**
(43) Date of publication of application: **28.11.2012**
(21) Application number: 11761957.7
(22) Date of filing: 16.03.2011
(51) Int. Cl.: H04L 12/18

(54) **METHOD AND SYSTEM FOR REPORTING MULTIMEDIA BROADCAST MULTICAST SERVICE MEASUREMENT**

(30) Priority: 02.04.2010 CN 201010142059
(71) Applicant: ZTE Corporation, Shenzhen, Guangdong 518057 (CN)
(72) Inventor: HE, Feng, Shenzhen Guangdong 518057 (CN); AI, Jianxun, Shenzhen Guangdong 518057 (CN); HUANG, Yada, Shenzhen Guangdong 518057 (CN); HAN, Lifeng, Shenzhen Guangdong 518057 (CN)
(74) Representative: Thrane, Dag
(86) International application number: PCT/CN2011/071881
(87) International publication number: WO 2011/120383

(57) **Abstract**

The present invention discloses a method and system for measuring and reporting a multimedia broadcast multicast service, for solving the technical problem of how to measure and report a measurement result reflecting MBMS performance by the UE. In the present invention, the UE measures the MBMS according to a measurement configuration, and when a measurement reporting norm is met, the UE reports a measurement result or a measurement log of the measured MBMS measurement quantity to a network side. By the method, the operators can be assisted to timely understand the MBMS service performance of the current cell and can timely find the potential problems according to the measurement reporting result, and then resolve the problems as soon as possible; furthermore, the efficiency and cost problems caused by previous drive test can be effectively saved, and the service performance is improved.

## Description

### Technical Field

The present invention relates to the communication field, and particularly, to a method and system for measuring and reporting a multimedia broadcast multicast service.

### Background of the Related Art

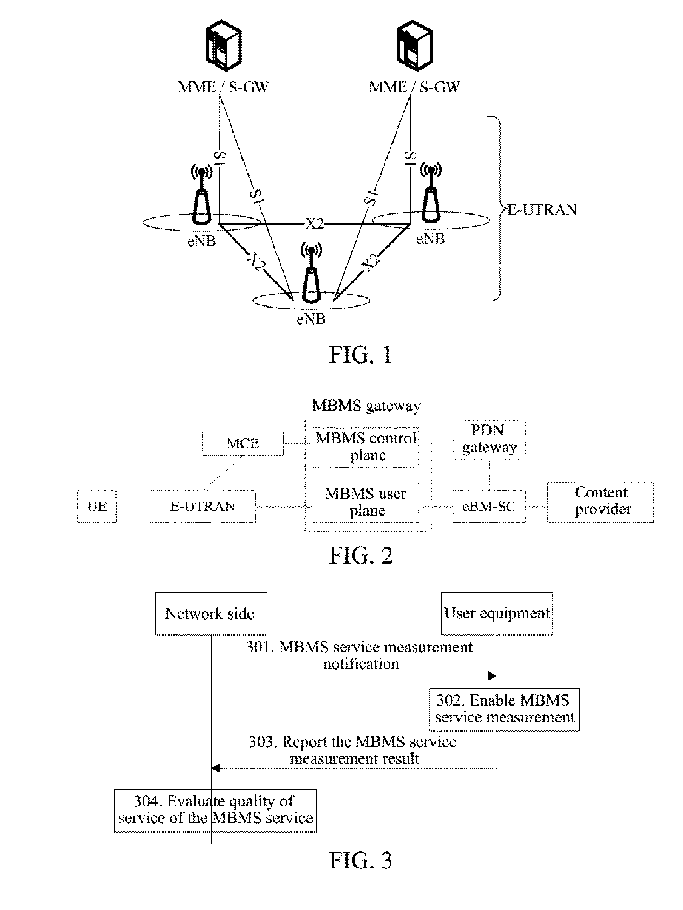

As shown in FIG. 1, the long term evolution (LTE) network consists of an evolved universal terrestrial radio access network (E-UTRAN) and an evolved packet core (EPC), and the network is flattened. The EUTRAN is connected to the EPC via S1 interfaces. The EUTRAN consists of a plurality of interconnected Evolved Nodes B (eNB), and each eNB is connected with each other via an X2 interface; and the EPC consists of a mobility management entity (MME) and a serving gateway entity (S-GW).

In order to effectively utilized mobile network resources, 3GPP (3rd Generation Partnership Project) proposes multimedia broadcast multicast service (MBMS), and proposes enhanced evolved MBMS service (E-MBMS) in the LTE system. In the LTE system, the logic architecture of the E-MBMS is shown in FIG. 2, an E-MBMS gateway is responsible for processing the MBMS service in the core network and consists of functions of a control plane and a user plane, and the functions of these two parts may be realized in different network entities. The E-UTRAN is connected with the user plane and control plane of the MBMS respectively, wherein the Multi-cell/multicast Coordination Entity (MCE) is a logic entity introduced by an access network for realizing multi-cell transmission (i.e., using an MBSFN transmission manner), and the MCE can be a part of a certain function entity (such as eNodeB) and can also be an independent entity. The MBMS gateway is connected with a content provider via an evolved Broadcast / Multicast Service Center (eBM-SC) in the core network. For the content provider, the eBM-SC is an entrance for the MBMS service content; and for a bearer network, the eBM-SC provides a management function for the MBMS service.

The MBMS service is a technology of transferring data from one data source to a plurality of targets, which realizes share of network (including the core network and the access network) resources and improves the utilization rate of the network resources (especially air interface resources). The MBMS defined by 3GPP not only can realize multicast and broadcast of message classes with pure text and low rate, but also can realize broadcast and multicast of high speed multimedia services, which provides a variety of rich videos, audios and multimedia services to user equipments (UE); thus, this undoubtedly follows the development trend of future mobile data and provides a better service prospect for the development of 3G.

In the 3GPP MBMS, the MBMS service can be sent by adopting a multicast mode, and according to difference of particular sending and receiving modes, the multicast mode of the MBMS service is further divided into: a Multicast/Broadcast over Single Frequency Network (MBSFN) mode and a soft combination mode.

In the MBSFN sending mode, a base station network element employs the same modulation and coding scheme in a plurality of cells, and sends the same physical signal by using the same physical resource, and a plurality of cells which send the same MBMS service signal by using the same physical resource and the MBSFN sending mode constitutes an MBSFN area. The features of MBMS multi-cell transmission include: 1) synchronous transmission within the MBSFN area; and 2) supporting the user terminal receives the MBSFN signals from multiple cells by combining, and improving the gain of the received signals. In the related art, the MBSFN sending mode is applied to sending of the MBMS of dedicated carrier frequency in a UMTS (Universal Mobile Telecommunications System) and the MBMS in the LTE system.

In the LTE system, one MBMS service is mapped to one MTCH (Multicast traffic Channel). A plurality of MTCH channels can be mapped to an MCH (Multicast Channel) transmission channel by time division multiplexing in the manner of dynamic multiplexing; the configuration information about each MCH/PMCH (Physical Multicast Control Channel) in one or more MBSFN Areas includes the MBSFN subframe configuration configured by each PMCH channel, the modulation and coding scheme, and so on, bearing on a Multicast Control Channel (MCCH). In the practical LTE networking, there are several MBSFN services in one MBSFN area, and the data channel MTCH having a plurality of identical MBSFN services of the MBSFN area and the multicast control channel (MCCH) of that MBSFN service can be multiplexed into one or more multicast channels (MCH). During transmission, according to the difference of QoS of the services, different services are mapped onto different MCHs, each MCH configures independent MCS (Modulation and Coding Scheme), and the MBSFN subframe mapped with the MCCH is provided with the MCS information dedicated to the MCCH.

In order to improve the sending efficiency of the MTCH, a plurality of MTCHs borne on each MCH can employ a dynamic schedule method, and two or more MTCHs can be multiplexed into the same MBSFN subframe by the dynamic schedule and occupy part of resources of this subframe. A plurality of MTCHs and dynamic schedule information (DSI) can be sent within one schedule timing, wherein the schedule information carries mapping information from the MTCH to the auxiliary MBSFN subframe; that mapping information is determined by means of a number index relationship of MBSFN subframes within a schedule period. The UE can acquire each MTCH is allocated on which MBSFN subframes by reading the schedule information, and the UE can read the interested MTCH on the corresponding MBSFN subframe and ignore the MBSFN subframes which need not to be read, thereby improving the MBMS service receiving efficiency of the UE and saving the electric energy consumption of the UE.

In addition to the LTE system, the MBMS services also exist in the UMTS system, and in the UMTS network, the interface between the eNB gateway and the core network is an Iu interface. The base station (NodeB) is connected with the core network (CN) via a radio network controller (RNC), the interface between the RNC and the CN is the Iu interface, and the interface between the base station and the radio network controller (RNC) is an Iub interface. However, a direct interface can also exist between RNCs, which is referred to as an Iur interface. There are several function entities inside the core network, such as a Gateway GPRS Support Node (GGSN), a Service GPRS Support Node (SGSN), etc.

The network architecture depends upon the existing 3G network architecture. The main improvements include the following two aspects: on the one hand, the MBMS services are provided and managed by adding a new function entity (broadcast multicast service center (BM-SC)), and on the other hand, the support to the MBMS services is added on the existing function entities, such as GGSN and SGSN.

The MBMS, as one network service provided by the operator to the user, requires to ensure the coverage and quality of service of the entire service, that is, the operator needs to timely know whether the MBMS service in the current network can meet the user requirement. The method for collecting such information by the operator basically has: collecting complaints of users or investing a great amount of manpower and material resources during the network deployment to execute drive test, so as to collect all the performance parameters. However, all these actions will bring a great deal of loss or cost expenditure to the operator. Therefore, if the service performance of the MBMS can be automatically reported via the UE, then the above problem can be solved. And, Minimization of drive tests (MDT) is an important function generated under such requirement and concerned by the operator in the next generation communication network, and is also an important requirement of a Next Generation Mobile Network (NGMN), and the purpose of the MDT is to reduce the network operation cost caused by the drive test during the network deployment and to improve the network maintenance efficiency, and the UE is required to replace the previous partial manpower drive test function and perform the measurement and report function for the network performance.

### Content of the Invention

In view of this, the main purpose of the present invention is to provide a method and system for measuring and reporting a multimedia broadcast multicast service, for solving the technical problem of how to reflect the measurement result of the MBMS performance by the measurement and reporting of the UE.

In order to achieve the above purpose, the technical solution in the present invention is implemented as follows.

A method for measuring and reporting a multimedia broadcast multicast service comprises:
a user equipment (UE) measuring a multimedia broadcast multicast service (MBMS) according to a measurement configuration, and when a measurement reporting norm is met, the UE reporting a measurement result of the measured MBMS measurement quantity to a network side.

Furthermore, the network side notifies the UE to measure the MBMS by a signaling, and the signaling contains the measurement configuration, or the UE measures the MBMS service according to a preset measurement configuration.

Furthermore, the measurement quantity comprises a combination of one or more of the following indices:
(1) a radio environment quality;
(2) a successful receiving rate of an MBMS control channel;
(3) a successful receiving rate of an MBMS service channel;
(4) a successful receiving rate of a multicast channel;
(5) a successful receiving rate of a multicast/broadcast single frequency network (MBSFN) subframe containing dynamic schedule information; and
(6) a signal to noise ratio of a multicast channel.

Furthermore, the measurement configuration contains a measurement triggering type, and the measurement triggering type is a combination of one or more of the following modes: periodic triggering, event triggering, and triggering according to a signaling instruction of the network side. When the trigger type is the event trigger, the event is: N consecutive decoding failures when the UE receives the multicast control channel (MCCH) or receives the multicast service channel (MTCH), or the successful receiving rate of the UE receiving transmission information of the multicast channel (MCH) being lower than a preset threshold T; wherein, N or T is issued to the UE by the network side by way of the measurement configuration or takes a default value.

Furthermore, the measurement reporting norm is obtained from the measurement configuration, and the measurement reporting norm is real-time reporting and/or non-real-time reporting; the non-real-time reporting is a combination of one or more of the following modes: reporting based on absolute time, periodic reporting, reporting based on positioning, and reporting according to a request of the network side.

Furthermore, the measurement configuration further contains a threshold parameter related to the measurement triggering type or the measurement reporting norm.

Furthermore, the measurement result, in addition to comprising a measurement record of the measurement quantity, further comprises measurement site information and/or measurement time information about the corresponding measurement record; the measurement site information comprises one or more of the following pieces of information: identification information about an MBSFN area corresponding to the UE during measurement, identification information about a serving cell where the UE is located, identification of a public land mobile network where the UE is currently located, and location information about the UE.

Furthermore, the measurement result, in addition to comprising a measurement record of the measurement quantity, further comprises MBSFN area configuration information corresponding to the measurement, and the MBSFN area configuration information is a combination of one or more of the following pieces of configuration information: physical multicast channel configuration, and MBMS session information currently measured by the UE.

Based on the above method, the present invention also proposes a system for measuring and reporting a multimedia broadcast multicast service, and the system comprises:
an MBMS measurement module, located at a user equipment side and configured to measure an MBMS according to a measurement configuration;
a measurement and report module, located at the user equipment side and configured to report a measurement result of the measured MBMS measurement quantity to a network side when a measurement reporting norm is met; and
an MBMS measurement result receiving module, located at the network side and configured to receive the MBMS measurement result reported by the user equipment side.

Furthermore, the network side further comprises a measurement notification module, configured to notify the UE to measure the MBMS by a signaling, wherein, the signaling comprising the measurement configuration.

In the present invention, the UE measures the MBMS according to the measurement configuration, and when the measurement reporting norm is met, the UE reports the measurement result or measurement log of the measured MBMS measurement quantity to the network side. By way of that method, the operators can be assisted to timely understand the MBMS traffic performance of the current cell and can timely find the potential problems according to the measurement reporting result, and then resolve the problems as soon as possible; furthermore, the efficiency and cost problems caused by previous drive test can be effectively saved, and the service performance is improved.

### Brief Description of Drawings

FIG. 1 is a schematic diagram of an architecture of E-UTRAN;
FIG. 2 is a schematic diagram of a logic architecture of eMBMS;
FIG. 3 is a flowchart of measuring and reporting an MBMS service according to an embodiment 1 of the present invention;
FIG. 4 is a flowchart of measuring and reporting an MBMS service according to an embodiment 2 of the present invention;
FIG. 5 is a structural diagram of a system for reporting an MBMS measurement result proposed in the present invention; and
FIG. 6 is a structural diagram of another system for reporting an MBMS measurement result proposed in the present invention.

### Preferred Embodiments of the Present Invention

In order to make the purpose, technical solution and advantages of the present invention more clear, the present invention will be further described in detail by embodiments and combining the accompanying drawings.

In the present invention, a network side notifies a UE to measure and report an MBMS service by a signaling, and the signaling optionally includes a measurement configuration; and when a measurement reporting norm is met, the UE reports a measurement result to the network side. Optionally, the UE can record the measurement result of the corresponding measurement quantity as a measurement log, and when the reporting norm is met, the UE reports the measurement result to the network side in the form of the measurement log.

Wherein, the measurement configuration includes a measurement triggering type, and the measurement triggering type can be a combination of one or more of the following triggering type: periodic triggering, event triggering, and triggering according to a signaling instruction of the network side; and optionally, the measurement configuration can further include a threshold parameter corresponding to the measurement triggering type.

If the triggering type is the event triggering, then the event refers to a particular event occurring when the UE is carrying out the MBMS service; for example, decoding fails continuously for N times when the UE receives an MCCH or receives an MTCH, or the successful receiving rate (or successful decoding rate) when the UE receives MCH transmission information is lower than a preset threshold T, and so on. Wherein, the threshold parameters such as N, T and so on can be issued to the UE via the network side by the measurement configuration and can also be a default value.

Preferably, the measurement reporting norm can be obtained from the measurement configuration, and optionally the measurement configuration can also include a threshold parameter related to the measurement reporting norm.

The measurement reporting norm can be real-time reporting and/or non-real-time reporting; and it can be provisioned to use different measurement reporting norms in different scenarios respectively, for example, the real-time reporting is used in a connected state and non-real-time reporting is used in an idle state wherein, the non-real-time reporting can be a combination of one or more of the following reporting modes: reporting based on absolute time, i.e., the UE reports at a certain specified time point; periodic reporting, i.e., the UE periodically reports the measurement result to the network; reporting based on positioning; reporting according to a request of the network side, etc.; wherein, the reporting based on positioning can be that the UE only reports when measuring the measurement result at a certain location, and the reporting according to the request can be that the UE reports when receiving a reporting request from the network side.

The threshold parameter related to the measurement triggering type or the measurement reporting norm is used for indicating that, when the UE meets a certain condition or when the measurement result meets a certain threshold, the UE enables the MBMS service measurement or the UE reports the measurement result.

The measurement quantity to be measured by the UE can include a combination of one or more of the following indices:
1, Radio environment measurement, such as Reference Signal Received Power (RSRP) and/or Reference signal received quality (RSRQ) and/or Received Signal Code Power (RSCP) and so on which are measured by the UE;
2, a successful receiving rate of the MBMS control channel (such as MCCH channel), such as a block error rate (BLER) of the channel or a successful decoding rate of the channel, and so on;
3, a successful receiving rate of the MBMS service channel (such as MTCH channel), such as a BLER of the channel or a successful decoding rate of the channel, and so on;
4, a successful receiving rate of the multicast channel (such as MCH transmission channel), such as a BLER of the channel or a successful decoding rate of the channel, and so on;
5, a successful receiving rate of the MBSFN subframe containing dynamic schedule information (DSI), such as a successful receiving probability of 100 subframes containing DSI; and
6, a signal to noise ratio of the multicast channel, such as SINR.

Preferably, the reported measurement result can further include the measurement site information and/or measurement time information corresponding to the measurement record in addition to including the measurement record of the measurement quantity. The measurement site information includes one or more of the following pieces of information: identification information (such as MBSFN area ID, etc.) about the MBSFN area corresponding to the UE during measurement, identification information (such as global identification ECGI of the cell, etc.) about the serving cell where the UE is located, identification of the public land mobile network (Public Land Mobile Network ID) where the UE is currently located, location information about the UE. The measurement time information can be information about timestamp which is for generating the measurement record.

Preferably, since the UE which performs the measurement may be located in an area overlapped by a plurality of MBSFNs or the area where the UE is located has a plurality of MBMS services simultaneously; and in order to let the network side know to measure which MBMS service, the reported measurement result can further include the MBSFN area configuration information (MBSFN Area Configuration) corresponding to the measurement in addition to including the measurement record of the measurement quantity, for example, it can include one or more of the following: physical multicast channel configuration, the MBMS session information (MBMS Session Information) currently measured by the UE, wherein the MBMS Session Information can be information such as service ID, session ID, logic channel ID, etc.

The measurement site information and the MBSFN Area Configuration information can help the network side to determine the geographical location where the measured MBMS service is located, which is helpful to the network to confirm the particular location of the problem, in order to troubleshoot.

Preferably, the network side can refer to RNC or NodeB or eNB or a network element such as an Operation Administration Management (OAM) unit, or another network element entity, such as a core network, etc.

Furthermore, the UE can actively measure the MBMS service, that is, the UE need not the particular signaling notification of the network side before the measurement starts, the UE actively measures the MBMS service according to the preset measurement configuration or the default measurement configuration, and when the present reporting norm is met, the measurement result will be reported to the network side.

In order to make the purpose, technical solution and advantages of the present invention more clear, the present invention will be further described in detail in combination with embodiments.

### Embodiment 1:

FIG. 3 is an embodiment of a process of measuring and reporting an MBMS service in the LTE, and the specific steps are as follows.

In step 301, the eNB sends an MBMS service measurement notification message to the UE according to the network demand, wherein the message includes the corresponding measurement configuration, and in the measurement configuration, the condition of triggering the UE to start to record the measurement log is: the UE periodically measures the MBMS service, wherein the measurement period is 2 seconds, and the UE is configured to report the measurement log at a fixed time each day (for example, it is configured as 2:00 each day).

In step 302, the UE starts to measure the MBMS service after receiving the notification message, and records the measurement result of the corresponding measurement quantity periodically (i.e., measurement log). Wherein, the content recorded in the measurement log includes: the radio signal quality RSRP and RSRQ values of the current network, the successful decoding rate for the UE receiving the MCCH channel, the bit error rate for the UE receiving the MTCH service channel, the identification of the serving cell where the UE is currently located and the GPS geographical location, and the recorded timestamp information.

In step 303, when the UE meets the measurement reporting triggering condition, i.e., 2:00 each day, the UE reports the measurement result (or measurement log) to the eNB.

In step 304, after collecting the measurement reporting of the UE, the eNB can evaluate the quality of the MBMS service of corresponding area according to the measurement result, and can adjust the specific configuration of the MBMS service according to the evaluated quality.

### Embodiment 2:

Referring to FIG. 3, it is an embodiment of another process of measuring and reporting an MBMS service in the LTE, and the specific steps are as follows.

In step A301, the eNB sends an MBMS service measurement notification message to the UE according to the network demand, and the message includes the corresponding measurement configuration to notify the UE to measure the MBMS service, wherein the measurement triggering type is that the number of times that the UE has continuously failed to decode the MCCH channel exceeds a preset threshold T1 (such as 3 times), and the UE is configured to report in real-time.

In step A302, after receiving the notification message, the UE starts to measure the MBMS service, and when the number of times that the UE has continuously failed to decode the MCCH channel exceeds the preset threshold T1, records the measurement content needed to be reported, including: the radio signal quality RSRP and RSRQ values of the current network, the bit error rate for the UE receiving the MCCH channel, the bit error rate for the UE receiving the MTCH service channel, the signal to noise ratio (SINR) of the MCH channel, the identification of the serving cell where the UE is currently located and GPS geographical location, and the recorded timestamp information.

In step A303, the UE reports the measurement result (or measurement log) obtained in step A302 to the eNB in real time.

In step 304, after collecting the measurement reporting of the UE, the eNB can evaluate the quality of the MBMS service of the corresponding area according to the measurement result, and can adjust the specific configuration of the MBMS service according to the evaluated quality.

The triggering type in step 1 can also be set as the signal quality of the UE receiving the MCCH channel is lower than a certain preset threshold T2, or the block error rate of the MTCH channel received by the UE exceeds a specified threshold T3, etc., wherein the specified threshold T1, T2 and T3 can be designated by the network side through the measurement configuration in the measurement notification message or can be default values.

### Embodiment 3:

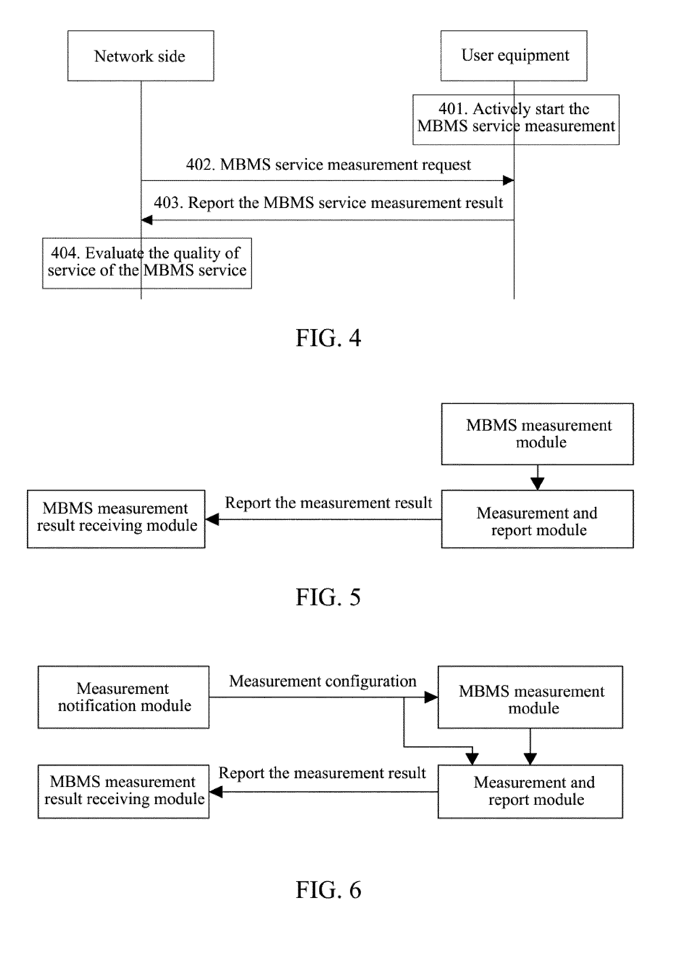

FIG. 4 is an embodiment of the present invention in which the UE in the LTE actively measures an MBMS according to the request of the network side according to a measurement configuration preset by the present end or a default measurement configuration and reporting a MBMS measurement result according to a request of a network side, and the specific steps are as follows.

In step 401, the UE actively measures the MBMS service, wherein the measurement triggering type is that the block error rate occurring by the UE receiving the MTCH channel exceeds a preset threshold T4 (such as 10%), then the measurement content (or measurement log) needed to be reported is recorded, and the measurement content includes: the radio signal quality RSRP and RSRQ values of the current network, the bit error rate of the UE receiving the MTCH service channel, the signal to noise ratio (SINR) of the MCH channel, the identification of the MBSFN area where the UE is currently located, the service identification and session identification of the MBMS service currently performed by the UE, the identification of the serving cell where the UE is currently located and GPS geographical location, and the recorded timestamp information.

In step 402, the network side sends an MBMS measurement reporting request message to the UE.

In step 403, the UE reports the measurement result (or measurement log) to the eNB, wherein the measurement reporting content is the measurement content (or measurement log) recorded in step 401. In the embodiment, the content of the specific measurement configuration, such as measurement triggering type and measurement reporting norm, can be configured by reference to the above description, which needs not to be described repeatedly here.

In step 404, after collecting the measurement reporting of the UE, the eNB can evaluate the quality of the MBMS service of the corresponding area according to the measurement result, and can adjust the specific configuration of the MBMS service according to the evaluated quality.

### Embodiment 4:

FIG. 5 is a structural schematic diagram of a system for reporting an MBMS measurement result proposed in the present invention, and the system includes: an MBMS measurement result receiving module at a network side, an MBMS measurement module and a measurement reporting module at a user equipment side;
the MBMS measurement module is used for measuring the multimedia broadcast multicast service (MBMS) according to the measurement configuration;
the measurement and report module is used for reporting the measurement result of the measured MBMS measurement quantity to the network side when the measurement reporting norm is met; and
the MBMS measurement result receiving module is used for receiving the MBMS measurement result reported by the user equipment side.

The measurement quantity includes a combination of one or more of the following indices:
(1) radio environment quality;
(2) the successful receiving rate information about the MBMS control channel, such as the block error rate (BLER) of the channel or the successful decoding rate of the channel, and so on;
(3) the successful receiving rate information about the MBMS service channel, such as the block error rate (BLER) of the channel or the successful decoding rate of the channel, and so on;
(4) the successful receiving rate information about the multicast channel, such as the BLER of the channel or the successful decoding rate of the channel, and so on;
(5) the successful receiving rate of the MBSFN subframe containing dynamic schedule information; and
(6) signal to noise ratio of the MCH channel.

The measurement configuration includes the triggering type which triggers the UE to start to record the measurement result, and the triggering type is one or more of the following way: periodic triggering, event triggering, or triggering according to the signaling indication of the network side. When the triggering type is the event triggering, the event is: N consecutive decoding failures when the UE receives the MCCH or MTCH channels, or the successful receiving rate of the UE receiving the MCH being lower than a preset threshold T; wherein, N or T is issued to the UE by the network side by way of the measurement configuration or takes a preset default value of the UE side.

The reporting norm is one or more of the following reporting modes: real-time reporting, non-real-time reporting, wherein the non-real-time reporting is a combination of one or more of the following modes: reporting based on absolute time, periodic reporting, reporting based on positioning, and reporting according to the request of the network side.

The measurement result further comprises measurement site information and/or measurement time information about the corresponding measurement record in addition to comprising the measurement record of the measurement quantity, and the measurement site information is one or more of the following: identification information about the MBSFN area corresponding to the UE during measurement, identification information about the serving cell where the UE is located, identification of the public land mobile network where the UE is currently located, location information about the UE.

The measurement result further comprises configuration information about the MBSFN area corresponding to the measurement in addition to comprising the measurement record of the measurement quantity, and the configuration information about the MBSFN area is a combination of one or more of the following pieces of configuration information: physical multicast channel configuration, and information about the MBMS session currently measured by the UE.

Preferably, the MBMS measurement module measures the MBMS service according to the local preset measurement configuration or the default measurement configuration; and the measurement and report module reports the MBMS measurement result or measurement log according to the measurement reporting norm in the local preset measurement configuration or the default measurement confguration.

Preferably, as shown in FIG. 6, in the system according to the present invention, the network side further comprises a measurement notification module for notifying the UE to measure the MBMS by a signaling, and the signaling comprising the measurement configuration. The MBMS measurement module and the measurement and report module measure and report the MBMS according to the measurement configuration issued by the measurement notification module.

The method and system for measuring and reporting the MBMS described in the present invention can also be applied in the UMTS system, and the particular implementation is similar to the above embodiments, which needs not be described repeatedly here.

It needs to be illustrated that the names of the messages, measurement quantities and so on used in the above solution may be different as the embodiments are different, but they all belong to the content scope of the present invention.

What are described above are merely preferred embodiments of the present invention, and are not intended to limit the protection scope of the present invention.

## Claims

1. A method for measuring and reporting a multimedia broadcast multicast service, comprising:
a user equipment (UE) measuring a multimedia broadcast multicast service (MBMS) according to a measurement configuration, and when a measurement reporting norm is met, the UE reporting a measurement result of the measured MBMS measurement quantity to a network side.

2. The method according to claim 1, wherein, the network side notifies the UE to measure the MBMS by a signaling, and the signaling contains the measurement configuration, or the UE measures the MBMS service according to a preset measurement configuration.

3. The method according to claim 2, wherein, the measurement quantity comprises a combination of one or more of the following indices:
(1) a radio environment quality;
(2) a successful receiving rate of an MBMS control channel;
(3) a successful receiving rate of an MBMS service channel;
(4) a successful receiving rate of a multicast channel;
(5) a successful receiving rate of a multicast/broadcast single frequency network (MBSFN) subframe containing dynamic schedule information; and
(6) a signal to noise ratio of a multicast channel.

4. The method according to claim 2, wherein, the measurement configuration contains a measurement triggering type, and the measurement triggering type is a combination of one or more of the following modes: periodic triggering, event triggering, and triggering according to a signaling instruction of the network side.

5. The method according to claim 4, wherein, when the trigger type is the event trigger, the event is: N consecutive decoding failures when the UE receives the multicast control channel (MCCH) or receives the multicast service channel (MTCH), or the successful receiving rate of the UE receiving the multicast channel (MCH) being lower than a preset threshold T; wherein, N or T is issued to the UE by the network side by way of the measurement configuration or takes a default value.

6. The method according to claim 2, wherein, the measurement reporting norm is obtained from the measurement configuration, and the measurement reporting norm is real-time reporting and/or non-real-time reporting; the non-real-time reporting is a combination of one or more of the following modes: reporting based on absolute time, periodic reporting, reporting based on positioning, and reporting according to a request of the network side.

7. The method according to claim 4 or 6, wherein, the measurement configuration further contains a threshold parameter related to the measurement triggering type or the measurement reporting norm.

8. The method according to any one of claims 1 to 6, wherein, the measurement result, in addition to comprising a measurement record of the measurement quantity, further comprises measurement site information and/or measurement time information about the corresponding measurement record; the measurement site information comprises one or more of the following pieces of information: identification information about an MBSFN area corresponding to the UE during measurement, identification information about a serving cell where the UE is located, identification of a public land mobile network where the UE is currently located, and location information about the UE.

9. The method according to any one of claims 1 to 6, wherein, the measurement result, in addition to comprising a measurement record of the measurement quantity, further comprises MBSFN area configuration information corresponding to the measurement, and the MBSFN area configuration information is a combination of one or more of the following pieces of configuration information: physical multicast channel configuration, and MBMS session information currently measured by the UE.

10. A system for measuring and reporting a multimedia broadcast multicast service, comprising:
an MBMS measurement module, located at a user equipment side and configured to measure an MBMS according to a measurement configuration;
a measurement and report module, located at the user equipment side and configured to report a measurement result of the measured MBMS measurement quantity to a network side when a measurement reporting norm is met; and
an MBMS measurement result receiving module, located at the network side and configured to receive the MBMS measurement result reported by the user equipment side.

11. The system according to claim 10, wherein, the MBMS measurement module measures one or more of the following indices which act(s) as the measurement quantity:
(1) a radio environment quality;
(2) a successful receiving rate of an MBMS control channel;
(3) a successful receiving rate of an MBMS service channel;
(4) a successful receiving rate of a multicast channel;
(5) a successful receiving rate of a multicast/broadcast single frequency network (MBSFN) subframe containing dynamic schedule information; and
(6) a signal to noise ratio of a multicast channel.

12. The system according to claim 10, wherein, the measurement configuration contains a measurement triggering type, and the measurement triggering type is a combination of one or more of the following modes: periodic triggering, event triggering, and triggering according to a signaling instruction of the network side.

13. The system according to claim 12, wherein, when the triggering type is the event triggering, the event is: N consecutive decoding failures when the UE receives the MCCH or receives the MTCH, or the successful receiving rate when the UE receives transmission information of the MCH being lower than a preset threshold T; wherein, N or T is issued to the UE by the network side by way of the measurement configuration or takes a default value.

14. The system according to claim 10, wherein, the measurement reporting norm is obtained from the measurement configuration, and the measurement reporting norm is real-time reporting and/or non-real-time reporting; the non-real-time reporting is a combination of one or more of the following modes: reporting based on absolute time, periodic reporting, reporting based on positioning, and reporting according to a request of the network side.

15. The system according to claim 12 or 14, wherein, the measurement configuration further comprises a threshold parameter related to the measurement triggering type or the measurement reporting norm.

16. The system according to any one of claims 10 to 14, wherein, the measurement result, in addition to comprising a measurement record of the measurement quantity, further comprises measurement site information and/or measurement time information about the corresponding measurement record; the measurement site information comprises one or more of the following pieces of information: identification information about an MBSFN area corresponding to the UE during measurement, identification information about a serving cell where the UE is located, identification of a public land mobile network where the UE is currently located, and location information about the UE.

17. The system according to claims 10 to 14, wherein, the measurement result, in addition to comprising a measurement record of the measurement quantity, further comprises MBSFN area configuration information corresponding to the measurement, and the MBSFN area configuration information is a combination of one or more of the following pieces of configuration information: physical multicast channel configuration, and MBMS session information currently measured by the UE.

18. The system according to claim 10, wherein, the network side further comprises a measurement notification module, configured to notify the UE to measure the MBMS by a signaling, wherein, the signaling comprising the measurement configuration.
